# EUROPÄISCHE PATENTANMELDUNG

(11) **EP 4 640 949 A1**
(43) Veröffentlichungstag der Anmeldung: **29.10.2025**
(21) Anmeldenummer: 25159909.8
(22) Anmeldetag: 25.02.2025
(51) Int. Cl.: E01C 19/38

(54) **RÜTTELPLATTE UND VERFAHREN ZUM VERSTELLEN EINER ZWISCHEN EINER STAUPOSITION UND EINER TRANSPORTPOSITION VERSCHWENKBAREN TRANSPORTEINRICHTUNG EINER RÜTTELPLATTE**

(30) Priorität: 24.04.2024 DE 102024111493
(71) Anmelder: BOMAG GmbH, 56154 Boppard (DE)
(72) Erfinder: Pavokovic, Denis, 56154 Boppard (DE)
(74) Vertreter: Zimmermann & Partner Patentanwälte mbB

(57) **Zusammenfassung**

Die Erfindung betrifft ein Rüttelplatte mit einer an einem Oberbau zwischen einer Stauposition und einer Transportposition um eine Lagerarmdrehachse verschwenkbar gelagerten Transporteinrichtung sowie ein Verfahren zum Verstellen einer zwischen einer Stauposition und einer Transportposition verschwenkbaren Transporteinrichtung einer Rüttelplatte.

## Beschreibung

Die Erfindung betrifft eine Rüttelplatte sowie ein Verfahren zum Verstellen einer zwischen einer Stauposition und einer Transportposition verschwenkbaren Transporteinrichtung einer Rüttelplatte.

Bei Rüttelplatten handelt es sich um Maschinen, die zur Verdichtung des Bodenuntergrundes eingesetzt werden. Diese können handgeführt ausgebildet sein und dazu eine Handführungseinrichtung, beispielsweise in Form eines Handführungsbügels, aufweisen. Rüttelplatten umfassen üblicherweise einen oder mehrere Unwuchterreger und können sich beispielsweise im Arbeitsbetrieb aufgrund der durch den oder die Unwuchterreger erzeugten Schwingungen springend bzw. in einem Sprungbetrieb über den Bodenuntergrund bewegen.

Es können Arbeitssituationen auftreten, in denen die Rüttelplatte ohne Sprungbetrieb versetzt bzw. transportiert werden soll, beispielsweise um den Bodenuntergrund zu schonen und/oder den Versatz der Rüttelplatte im Vergleich zum Arbeitsbetrieb der Rüttelplatte erheblich schneller durchführen zu können. Aus dem Stand der Technik ist es hierzu bekannt, eine Transporteinrichtung mit einem Räderpaar an der Rüttelplatte vorzusehen. Die Transporteinrichtung kann beispielsweise in Form einer Transportkarre ausgebildet sein, wie beispielsweise in der DE 7 212 695 U offenbart, die in eine Aufnahme der Rüttelplatte zu Transportzwecken eingehakt werden kann. Auch sind Einrichtungen bekannt, wie beispielsweise in der DE 10 2008 045 557A1 und der DE 84 16 280 U1 offenbart, bei denen Transporträder zwischen einer Stauposition und einer Transportposition verschwenkbar an der Rüttelplatte gelagert sind. Eine weitere Alternative offenbart die EP 1 513 985 B1, die zu Transportzwecken die Nutzung von Transportrollen vorschlägt, die fest mit der Vibrationsplatte verbunden sind.

Bei den bekannten Lösungen mit zwischen einer Stauposition und einer Transportposition an der Rüttelplatte verschwenkbaren Transporträdern besteht noch Verbesserungspotential, denn der Verstellvorgang wird teilweise als unkomfortabel empfunden.

Hiervon ausgehend besteht die Aufgabe der Erfindung darin, eine Möglichkeit anzugeben, eine gegenüber dem Stand der Technik verbesserte Ausbildung einer Rüttelplatte mit einer zwischen einer Stauposition und einer Transportposition verstellbaren Transporteinrichtung anzugeben.

Die Lösung der Aufgabe gelingt mit einer Rüttelplatte und einem Verfahren gemäß den unabhängigen Ansprüchen. Bevorzugte Weiterbildungen sind in den abhängigen Ansprüchen angegeben.

Eine gattungsgemäße Rüttelplatte umfasst einen Unterbau mit einer Bodenkontaktplatte, einen über eine Dämpfungseinrichtung mit dem Unterbau verbundenen Oberbau mit einer oder mehreren Funktionseinrichtungen sowie eine Handführungseinrichtung.

Bei der Bodenkontaktplatte kann es sich insbesondere um eine Grundplatte handeln, die eine im Wesentlichen plane Aufstandsfläche aufweist. Insbesondere sich in Vorwärtsrichtung und in Rückwärtsrichtung und teilweise auch zu den Seiten an diese Aufstandsfläche anschließend kann die Grundplatte jeweils nach oben umgebogene Bereiche aufweisen, um zu verhindern, dass sich die Rüttelplatte im Arbeitsbetrieb selbst in den Bodenuntergrund eingräbt. Die Bodenkontaktplatte bezeichnet somit diejenige Einrichtung, mit der die Rüttelplatte im Arbeitsbetrieb auf dem zu verdichtenden Bodenuntergrund aufsteht bzw. mit diesem in Kontakt ist. An der Bodenkontaktplatte können ein oder mehrere Schwingungserregungseinrichtungen angeordnet sein, insbesondere sogenannte Unwuchterreger. Diese können direkt angetrieben sein, insbesondere durch einen ebenfalls an der Bodenkontaktplatte angeordneten Elektro- oder Hydraulikmotor, oder durch ein angetriebenes Antriebsgetriebe, insbesondere einen Riementrieb, angetrieben werden.

Auf der Oberseite des Unterbaus ist ein sogenannter Oberbau gelagert. Dieser ist mit dem Unterbau über Schwingungsdämpfungseinrichtungen, beispielsweise Gummipuffer, verbunden und stellt eine rahmenartige Tragstruktur für eine oder mehrere Funktionseinrichtungen, wie beispielsweise einen Antriebsmotor, insbesondere einen Elektro- oder Verbrennungsmotor, einen Energiespeicher, wie insbesondere einen Akkumulator oder einen Kraftstofftank, einen Wassertank, eine Steuereinrichtung, wie beispielsweise eine Motorsteuerung und/oder eine Leistungselektronik, oder ähnliches, dar.

Mit dem Oberbau verbunden ist ferner die Handführungseinrichtung, bei der es sich beispielsweise um einen im Wesentlichen U-förmigen Führungsbügel oder um eine Führungsdeichsel handeln kann. Die Handführungseinrichtung ist zur Reduktion von HAV-Belastungen (Hand-Arm-Vibrationen) eines Bedieners ebenfalls vorzugsweise über eine Schwingungsdämpfungseinrichtung mit dem Oberbau verbunden, wobei es sich auch in diesem Fall beispielsweise um Gummipuffer oder Gummilager handeln kann. Ein Bediener der Rüttelplatte kann die Handführungseinrichtung dazu nutzen, die Bewegungsrichtung und/oder Bewegungsgeschwindigkeit der Rüttelplatte zu beeinflussen, sie für Kurvenfahrten beispielsweise um die Kurve zu drücken oder ähnliches. Die Handführungseinrichtung kann schwenkbar an dem Oberbau gelagert sein. Es ist bevorzugt, wenn die Handführungseinrichtung in einem Heckbereich des Oberbaus an diesem angelenkt ist, insbesondere also in einem in Bezug auf die Längserstreckung des Oberbaus in eine Vorwärtsrichtung der Rüttelplatte hinteren Drittel des Oberbaus. Ferner ist die Handführungseinrichtung vorzugsweise derart ausgebildet, dass der Bediener diese bei einer Bewegung der Rüttelplatte in Vorwärtsrichtung manuell betätigen kann und dabei im Arbeitsbetrieb der Rüttelplatte üblicherweise hinter dieser herläuft.

Teil der Rüttelplatte ist ferner eine Transporteinrichtung. Diese kann an dem Oberbau der Rüttelplatte zwischen einer Stauposition und einer Transportposition um eine Lagerarmdrehachse verschwenkbar gelagert sein. Die Transporteinrichtung umfasst wenigstens ein an einer Lagereinrichtung mit wenigstens einem Lagerarm angeordnetes Rad, wobei der wenigstens eine Lagerarm um die Lagerarmdrehachse relativ zum Oberbau der Rüttelplatte zusammen mit dem Räderpaar zwischen der Stauposition und der Transportposition verschwenkbar ist. Der Lagerarm stellt somit den, vorzugsweise eingliedrigen, Verbindungshebel zwischen dem Oberbau und dem wenigstens einen Rad dar. Das Rad ist vorzugsweise um eine Drehachse drehbar an dem Lagerarm gelagert. Sofern mehrere Räder vorhanden sein, beispielsweise in Form eines Räderpaares, sind diese vorzugsweise um zueinander parallele und/oder koaxiale Drehachsen drehbar an dem Lagerarm angeordnet. Es können auch mehrere Lagerarme, insbesondere ein Lagerarmpaar, vorgesehen sein, die entlang dieser Drehachsen axial beabstandet sind. Es kann vorgesehen sein, dass jedem Lagerarm des Lagerarmpaares jeweils ein Rad zugeordnet und an diesem drehbar gelagert ist. Es können jedem Lagerarm auch mehr als ein Rad zugeordnet sein. Das wenigstens eine Rad, insbesondere mehrere Räder und ganz besonders ein Radpaar, können auch gleichzeitig mehreren Lagerarmen zugeordnet sein bzw. am diesen gelagert sein.

In der Transportposition ist das wenigstens eine Rad, insbesondere das Räderpaar, vorzugsweise in einer Relativlage zur übrigen Rüttelplatte, in der es sich unterhalb der Bodenkontaktplatte befindet, so dass die übrige Rüttelplatte auf das wenigstens eine Rad, insbesondere das Räderpaar, aufgebockt und dadurch leichter transportiert werden kann. Dieses Aufbocken kann von einem Bediener beispielsweise mithilfe der Handführungseinrichtung und einer darüber eingeleiteten Nickbewegung der Rüttelplatte um eine Querachse quer zur Vorwärtsrichtung herbeigeführt werden. Die Rüttelplatte steht dann nicht mehr über die Bodenkontaktplatte auf dem Bodenuntergrund auf, sondern über das wenigstens eine Rad, insbesondere das Räderpaar. Die Lagerung der Bodenkontaktplatte kann auf dem oder den oder an dem oder den Lagerarmen erfolgen.

In der Stauposition ist die Transporteinrichtung dagegen derart an der Rüttelplatte verstellt, dass das wenigstens eine Rad, insbesondere das Räderpaar, gegenüber dem Bodenuntergrund angehoben ist und im Idealfall möglichst platzsparend zumindest im Wesentlichen innerhalb der Außenkontur der durch den Oberbau, den Unterbau und die Handführungseinrichtung gebildeten Außenkontur der Rüttelplatte verstaut ist. Es ist dabei besonders bevorzugt, wenn die Handführungseinrichtung als Handführungsbügel ausgebildet ist und das wenigstens eine Rad, insbesondere das Räderpaar, sowie der oder die Lagerarme zumindest in der Stauposition, vorzugsweise auch in der Transportposition, in Vorwärtsrichtung der Rüttelplatte gesehen innerhalb der Breite der Handführungseinrichtung liegen.

Die Transporteinrichtung kann insbesondere derart ausgebildet sein, dass sie bei einer Verstellung zwischen der Stauposition und der Transportposition an der übrigen Rüttelplatte gelagert bleibt, mit anderen Worten nicht demontiert wird. Insbesondere ist es vorteilhaft, wenn die Transporteinrichtung derart ausgebildet und am Oberbau der Rüttelplatte gelagert ist, dass sie bei einer Verstellung zwischen der Stauposition und der Transportposition um die Lagerarmdrehachse relativ zum Oberbau der Rüttelplatte zusammen mit dem wenigstens einen Rad, insbesondere dem Räderpaar, zwischen der Stauposition und der Transportposition verschwenkt wird. Die Lagerarmdrehachse bezeichnet eine geometrische Bewegungsachse und verläuft vorzugsweise horizontal und quer zur Vorwärtsrichtung der Rüttelplatte.

Um sicherzustellen, dass sich die Transporteinrichtung nicht unkontrolliert aus der Stauposition, insbesondere während des Arbeitsbetriebs der Rüttelplatte, löst, umfasst die Transporteinrichtung eine Rasteinrichtung zur Arretierung der Transporteinrichtung in der Stauposition. Konkret kann hierzu ein Rastelement vorgesehen sein, das aus einer Rastposition in Richtung eines Freigabebereiches verstellbar ist. Befindet sich das Rastelement im Freigabebereich, arretiert es die Transporteinrichtung nicht in der Stauposition. In der Rastposition stellt der Rastelement dagegen die Transporteinrichtung in der Stauposition gegenüber dem Oberbau der Rüttelplatte fest. Der Freigabebereich bezeichnet somit einen Bereich, innerhalb dessen das Rastelement bewegbar ist und in dem es sich gleichzeitig nicht in der Rastposition befindet. Der Freigabebereich kann sich von der Bewegung des Rastelementes an eine Freigabeposition anschließen. Die Freigabeposition bezeichnet diejenige Position des Rastelementes, ab der eine Bewegung der Transporteinrichtung aus der Stauposition in Richtung der Transportposition am Rastelement vorbei möglich ist. Bei einer über diese Position hinausgehenden fortgesetzten Bewegung des Rastelementes bewegt sich dieses innerhalb seines Freigabebereiches. Der Bewegungsumfang des Rastelementes innerhalb des Freigabebereiches kann durch einen Verstellanschlag limitiert sein.

Bei dem Rastelement handelt es sich vorzugsweise um einen Rasthebel. Dieser kann über ein Drehgelenk am Oberbau der Rüttelplatte um eine Rastelementdrehachse schwenkbar angelenkt sein. Die Rastelementdrehachse verläuft besonders bevorzugt parallel zur Lagerarmdrehachse.

Erfindungsgemäß umfasst die Transporteinrichtung der Rüttelplatte ein Schwenkantriebsgetriebe, welches derart ausgebildet ist, dass es eine Verstellbewegung der Rasteinrichtung, insbesondere des Rastelementes, aus der Rastposition in Richtung des Freigabebereiches in eine Verschwenkbewegung des Lagerarms aus der Stauposition in Richtung der Transportposition umwandelt. Damit kommt der Rasteinrichtung, insbesondere dem Rastelement, eine Doppelfunktion zu, denn ergänzend zur Arretierung und Freigabe der Transporteinrichtung kann sie als Bewegungsübertragungselement genutzt werden, mit dem zumindest ein Bewegungsimpuls der Transporteinrichtung von der Stauposition in die Transportposition initiiert werden kann. Für den Bediener geht damit der Vorteil einher, dass er nun nur noch eine einzige Einrichtung, idealerweise mit einer einzigen, ganz besonders durchgehenden, Betätigungsbewegung, betätigen muss, um gleichzeitig oder sukzessive die Verrastung bzw. Arretierung der Transporteinrichtung in der Stauposition zu lösen und darüber hinaus die Verstellbewegung der Transporteinrichtung aus ihrer Stauposition in Richtung der Transportposition einzuleiten.

Die Rasteinrichtung und das Schwenkantriebsgetriebe können somit miteinander verkoppelt sein, insbesondere mechanisch zwangsverkoppelt. Diese Verkoppelung muss nicht dauerhaft und in jeder Relativlage der Rasteinrichtung vorliegen. Sie kann auch übergangsweise und in nur bestimmten Bewegungs- bzw. Verstellphasen der Rasteinrichtung und insbesondere des Rastelementes gegeben sein. Wesentlich ist aber, dass die Rasteinrichtung und das Schwenkantriebsgetriebe derart aufeinander abgestimmt ausgebildet sind, dass eine gemeinsame Stellbewegung, insbesondere des Rastelementes, sowohl die Arretierung der Transporteinrichtung in der Stauposition aufhebt als auch die Transporteinrichtung aus der Stauposition heraus in Richtung der Transportposition bewegt.

Es kann vorgesehen sein, dass das Schwenkantriebsgetriebe derart ausgebildet ist, dass es die Verstellbewegung der Transporteinrichtung aus der Stauposition in Richtung der Transportposition wenigstens bis zu einem Bewegungsscheitelpunkt oder wenigstens bis über einen Bewegungsscheitelpunkt in Richtung der Transportposition hinaus antreibt, ab dem die Transporteinrichtung bei mit der Bodenkontaktplatte auf dem Bodenuntergrund aufstehender Positionierung der Rüttelplatte ihre Verstellbewegung in Richtung der Transportposition anschließend schwerkraftgetrieben und damit selbsttätig weiter fortsetzt. Ab diesem Bewegungsscheitelpunkt kann es auch vorgesehen sein, dass bewegungsübertragende Elemente des Schwenkantriebsgetriebe außer Eingriff miteinander oder außer Anlage aneinander gelangen.

Es hat sich gezeigt, dass diese Art der Transporteinrichtung insbesondere für sogenannte vorwärtslaufende Rüttelplatten geeignet ist. Derartige Rüttelplatte umfassen in der Regel eine Schwingungserregungseinrichtung, deren Amplitude in Aufwärtsrichtung schräg in Vorwärtsrichtung nach vorn geneigt ist, so dass sich die Rüttelplatte im Sprungbetrieb aus eigenem Antrieb schrittweise in Vorwärtsrichtung bewegt.

Es kann vorgesehen sein, dass das Rastelement einen Sperranschlag aufweist, der in der Stauposition der Transporteinrichtung mit einer drehfest mit dem wenigstens einen Lagerarm verbundenen Sperrformation derart in Eingriff steht, dass eine Schwenkbewegung um die Lagerarmdrehachse aus der Stauposition in Richtung der Transportposition blockiert wird. Der Sperranschlag kann beispielsweise als Rastnase ausgebildet sein. Die Sperrformation kann beispielsweise als eine wenigstens teilweise komplementär zum Sperranschlag, insbesondere zur Rastnase, ausgebildete Ausnehmung ausgebildet sein.

Es ist bevorzugt, wenn die Bewegungsrichtung des Rastelementes bei einer Verstellung aus der Rastposition in Richtung des Freigabebereiches und innerhalb des Freigabebereiches konstant ist. Besonders bevorzugt ist eine Schwenkbewegung um eine Rastelementdrehachse, insbesondere um die Rastelementdrehachse. Die Rastelementdrehachse verläuft vorzugsweise parallel zur Lagerarmdrehachse.

Es ist möglich, dass die Sperrformation an einer in Längsrichtung der Lagerarmdrehachse verlaufenden Lagerarmwelle, insbesondere ortsfest, angeordnet ist. Die um die Lagerarmdrehachse drehbare Lagerarmwelle lagert nicht nur den oder die Lagerarme des wenigstens einen Rades, insbesondere des Räderpaares, sondern trägt dann gleichzeitig die Sperrformation. Vorzugsweise dreht sich die Sperrformation bei einer Verstellung der Transporteinrichtung somit auch um die Lagerarmdrehwelle und dabei insbesondere aus dem Eingriffsbereich des Rastelementes heraus.

Die Sperrformation kann Teil eines Steuernockens mit einer um die Lagerarmdrehachse verlaufenden Nockenfläche sein. Bevorzugt ist es, wenn die Sperrformation als eine in Radialrichtung zur Lagerarmdrehachse rückspringende Arretierausnehmung ausgebildet ist, insbesondere mit einer in Radialrichtung zur Lagerarmdrehachse verlaufenden Anschlagfläche für das Rastelement. Die Nockenfläche kann nun insbesondere derart ausgebildet sein, dass sich ihr radialer Abstand in Drehrichtung aus der Transportposition kommend in Richtung der Stauposition der Transporteinrichtung stufenlos vergrößert und zur Arretierausnehmung dann sprunghaft kleiner wird. Auf diese Weise wird für die Rückstellbewegung der Transporteinrichtung ein Nockenhubbereich bereitgestellt, der als Führungsfläche für das Rastelement hin zur Rastposition wirken kann.

Es ist vorteilhaft, wenn das Rastelement federbeaufschlagt in Richtung seiner Rastposition ist. Dies kann beispielsweise mithilfe einer geeigneten Federeinrichtung, beispielsweise einer Zug- oder Druckfeder, erreicht werden. Auf diese Weise kann zuverlässiger gewährleistet werden, dass das Rastelement, insbesondere bei einer Rückverstellung der Transporteinrichtung aus der Transportposition in die Stauposition, die Transporteinrichtung bei einem Erreichen der Stauposition selbsttätig arretiert und das Rastelement beispielsweise nicht separat und manuell in die Rastposition verstellt werden muss.

Hinsichtlich der konkreten Ausgestaltung des Schwenkantriebsgetriebes bestehen verschiedene Möglichkeiten. Beispielsweise können Koppelgetriebe verwendet werden. Es hat sich allerdings als vorteilhaft erwiesen, wenn das Schwenkantriebsgetriebe als ein Kurvengetriebe ausgebildet ist. Kurvengetriebe zeichnen sich dadurch aus, dass sie eine Steuerkurve und eine entlang der Steuerkurve verlaufende Kurvenkontakteinrichtung, beispielsweise einen Abtaster, umfassen. Mithilfe des entlang der Steuerkurve entlangfahrenden Abtasters erfolgt eine Bewegungsübertragung und/oder Bewegungsumwandlung der den Abtaster und die Steuerkurve tragenden Elemente.

Es ist beispielsweise möglich, dass das Kurvengetriebe eine ortsfest zum Lagerarm ausgebildete Steuerkurve aufweist. Die Steuerkurve kann als in Richtung ihrer Längserstreckung verlaufendes Langloch ausgebildet sein. Es ist jedoch bevorzugt, wenn die Steuerkurve derart ausgebildet ist, dass sie quer zu ihrer Längserstreckung nur eine einseitige Steuerfläche aufweist. Teil des Kurvengetriebes kann ferner ein ortsfest zum Rastelement angeordneter Abtaster sein. Der Abtaster kann als vorspringender Finger ausgebildet sein oder auch eine, insbesondere wälzgelagerte, Rolle umfassen. Der Abtaster kann somit um sich selbst drehend an dem Rastelement gelagert sein. Wesentliche ist, dass er seine Lagerposition zum Rastelement nicht ändert. Alternativ kann die Steuerkurve auch am Rastelement und der Abtaster des Kurvengetriebes am Rastelement angeordnet sein.

Besonders vorteilhaft ist es, wenn der Abtaster ein Abtastzapfen ist, der in Axialrichtung der Lagerarmdrehachse vom Rastelement vorsteht.

Es kann vorgesehen sein, dass ein Übertragungsbereich des Kurvengetriebes und ein Kontaktbereich der Rasteinrichtung in Richtung der Lagerarmdrehachse axial beabstandet sind. Der Übertragungsbereich des Kurvengetriebes bezeichnet denjenigen Bereich des Kurvengetriebes, in dem die Glieder des Kurvengetriebes, konkret beispielsweise der Abtaster und die Steuerkurve, aneinander anliegen. Der Kontaktbereich der Rasteinrichtung bezeichnet denjenigen Bereich, in dem das Rastelement an beispielsweise der Sperrformation anliegt.

Im praktischen Einsatz hat es sich als vorteilhaft erwiesen, wenn das Rastelement fußbetätigbar von einem Bediener der Rüttelplatte ausgebildet ist. Dazu kann am Rastelement ein Fußkontaktbereich vorgesehen sein, den der Bediener aus einer idealerweise stehenden Position mit seinem Fuß zur Verstellung des Rastelementes von der Rastposition in den Freigabebereich direkt erreichen kann. Ergänzend oder alternativ kann es vorgesehen sein, dass eine Übertragungseinrichtung vorgesehen ist, die derart ausgebildet ist, dass eine Verstellung des Rastelementes, wenigstens von der Rastposition in den Freigabebereich, manuell ausgelöst und von der Übertragungseinrichtung an das Rastelement übertragen wird. Hierbei kann es sich beispielsweise um einen Bowdenzug, eine Hydraulikleitung oder ähnliches handeln. Auch eine motorische, insbesondere elektromotorische, und über die Übertragungseinrichtung, beispielsweise eine Signalübertragungsleitung, gesteuerte Verstellung des Rastelementes ist denkbar. Mit insbesondere der Nutzung einer Übertragungseinrichtung ist es beispielsweise möglich, die Verstellung des Rastelementes auch von der Handführungseinrichtung aus und manuell vorzunehmen.

Es ist möglich, dass eine Drehdämpfungseinrichtung vorhanden ist, die derart ausgebildet ist, dass sie die Verstellbewegung der Transporteinrichtung wenigstens von der Stauposition zur Transportposition dämpft. Hierbei kann es sich beispielsweise um eine oder mehrere Tellerfedern, eine oder mehrere Spannscheiben, eine oder mehrere Gasdruckfedern oder ähnliche Einrichtungen handeln. Dadurch kann verhindert werden, dass sich die Transporteinrichtung mehr oder weniger unvermittelt und mit vergleichsweise großer Wucht in Richtung der Transportposition bewegt. Dies ist insbesondere dann vorteilhaft, wenn die Verstellbewegung der Transporteinrichtung, wie vorstehend bereits beschrieben, insbesondere bei einem Überschreiten eines Bewegungsscheitelpunktes, schwerkraftgetrieben erfolgt. Ideal ist es, wenn die Drehdämpfungseinrichtung derart ausgebildet ist, dass sie nur ab einer bestimmten Bewegungsgeschwindigkeitsgrenze und/oder aber einer bestimmten Winkellage dämpfend wirkt. Ergänzend oder alternativ ist es vorteilhaft, wenn die Drehdämpfungseinrichtung derart ausgebildet ist, dass sie ausschließlich in eine Richtung, konkret die Verstellrichtung in Richtung zur Transportposition, nicht aber in Richtung der Stauposition wirkt.

Ein weiterer Aspekt der Erfindung betrifft ein Verfahren zum Verstellen einer zwischen einer Stauposition und einer Transportposition verschwenkbaren Transporteinrichtung einer Rüttelplatte. Das Verfahren eignet sich besonders zur Anwendung an einer Rüttelplatte wie vorstehend beschrieben. Insofern werden die vorhergehenden Angaben im Sinne bevorzugter Ausführungsformen vollumfänglich für das erfindungsgemäße Verfahren in Bezug genommen.

Für das erfindungsgemäße Verfahren kann es zum Verstellen der Transporteinrichtung aus der Stauposition in Richtung der Transportposition vorgesehen sein, dass zunächst in einem Schritt a) ein Lösen einer Verrastung einer Rasteinrichtung einer Lagereinrichtung der Transporteinrichtung durch ein Verstellen eines Rastelements aus einer Rastposition in Richtung eines Freigabebereiches des Rastelementes erfolgt. In einem Schritt b) kann ein Verstellen der Transporteinrichtung aus der Stauposition in Richtung der Transportposition mithilfe eines Schwenkantriebsgetriebes vorgesehen sein. Mithilfe des Schwenkantriebsgetriebes wird erreicht, dass die Verstellung der Transporteinrichtung aus der Stauposition in Richtung der Transportposition zumindest übergangsweise definiert und durch das Schwenkantriebsgetriebe geführt erfolgt.

Die Schritte a) und b) können gleichzeitig bzw. parallel oder auch einander überlappend durchgeführt werden. Bevorzugt ist es jedoch, wenn die Schritte a) und b) funktional nacheinander erfolgen, der Schritt b) insbesondere auf den Schritt a) folgt. Ideal ist es, wenn eine, beispielsweise manuell und/oder fussbetätigt oder motorisch angetriebene, Fortsetzung der Verstellbewegung des Rastelements im Schritt a) auch den Schritt b) antreibt.

Es kann vorgesehen sein, dass sich der Schritt b) nicht bis zum tatsächlichen Erreichen der Transportposition der Transporteinrichtung erstreckt, sondern sich in Bezug auf den gesamten Bewegungsvorgang von der Stauposition in die Transportposition nur auf eine von der Stauposition ausgehende Anfangsphase beschränkt. Diese Anfangsphase kann sich beispielsweise bis zum Erreichen eines Bewegungsscheitelpunktes der Transporteinrichtung ausdehnen, bei dessen Überschreiten sich die Transporteinrichtung, beispielsweise schwerkraftgetrieben, weiter in Richtung der Transportposition bewegt.

Zur Einleitung des Schrittes b) kann ein Abtaster eines Kurvengetriebes an eine Steuerkurve des Kurvengetriebes anschlagen, insbesondere dann, wenn das Rastelement eine Freigabeposition erreicht oder in einen Freigabebereich hinein überschritten hat.

Zum Verstellen der Transporteinrichtung aus der Transportposition in Richtung der Stauposition kann es vorgesehen sein, dass in einem Schritt c) ein Verschwenken der Lagereinrichtung aus der Transportposition in Richtung der Stauposition erfolgt. Während dieser Bewegung ist es vorteilhaft, wenn in einem Schritt d) ein Ablaufen einer Nockenfläche eines Steuernockens und dabei ein Verstellen des Rastelements in Radialrichtung nach außen gegenüber der Lagerarmdrehachse erfolgt. Dabei ist es besonders bevorzugt, wenn dadurch eine auf das Rastelement in Richtung der Stauposition wirkende Federbeaufschlagung gespannt oder weiter gespannt wird. In einem Schritt e) erfolgt dann, insbesondere angetrieben durch eine Federbeaufschlagung des Rastelements, ein Einrasten des Rastelements in einer Rastposition durch Verstellen einer Rastformation des Rastelements in Radialrichtung nach innen, wenn sich die Transporteinrichtung in der Transportposition befindet.

Die Erfindung wird nachstehend anhand der in den Figuren gezeigten Ausführungsbeispiele näher erläutert. Es zeigen schematisch:
- Fig. 1: eine Draufsicht auf eine Rüttelplatte;
- Fig. 2: eine Querschnittsansicht auf die Rüttelplatte aus Fig. 1 mit in Stauposition befindlicher Transporteinrichtung;
- Fig. 3: eine Querschnittsansicht auf die Rüttelplatte aus Fig. 1 mit in Transportposition befindlicher Transporteinrichtung;
- Fig. 4A: die Transporteinrichtung aus den Figuren 1 bis 3 in Stauposition mit in einer Rastposition befindlicher Rasteinrichtung;
- Fig. 4B: eine Detailansicht der Rasteinrichtung aus Fig. 4A;
- Fig. 5A: die Transporteinrichtung aus den Figuren 1 bis 3 in Stauposition mit in einer Freigabeposition befindlichen Rasteinrichtung;
- Fig. 5B: eine Detailansicht der Rasteinrichtung aus Fig. 5A;
- Fig. 6A: die Transporteinrichtung aus den Figuren 1 bis 3 in einer Übergangsposition zwischen der Stauposition und einer Transportposition mit im Freigabebereich befindlichem Rastelement;
- Fig. 6B: eine Detailansicht der Rasteinrichtung aus Fig. 6A;
- Fig. 7A: die Transporteinrichtung aus den Figuren 1 bis 3 in Transportposition mit auf einem Steuernocken aufliegendem Rastelement;
- Fig. 7B: eine Detailansicht der Rasteinrichtung aus Fig. 7A; und

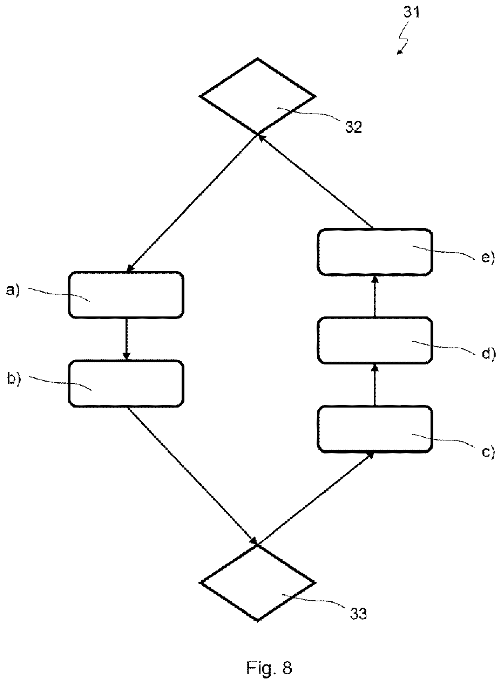

- Fig. 8: ein Ablaufdiagramm eines erfindungsgemäßen Verfahrens.

Gleiche beziehungsweise gleich wirkende Bauteile sind in den Figuren mit den gleichen Bezugszeichen bezeichnet. Sich wiederholende Bauteile sind nicht notwendigerweise in jeder Figur gesondert bezeichnet.

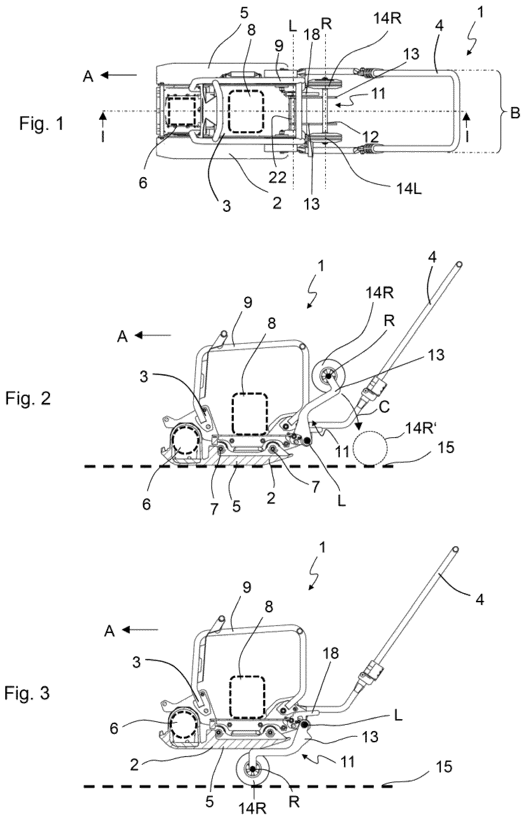

Fig. 1 zeigt eine Draufsicht auf eine Rüttelplatte 1 und Fig. 2 eine Seitenquerschnittsansicht auf diese Rüttelplatte 1 entlang der Linie I-I aus Fig. 1.

Die Rüttelplatte 1 kann einen Unterbau 2, einen Oberbau 3 und eine Handführungseinrichtung 4 umfassen. Der Unterbau 2 kann eine Bodenkontaktplatte 5 aufweisen, die in Vorwärtsrichtung A gesehen nach vorn und nach hinten angewinkelt und/oder nach oben gebogen ausgebildet ist. An der Bodenkontaktplatte 5 können eine oder mehrere Schwingungserregungseinrichtungen, 6, insbesondere Unwuchterreger, angeordnet sein. Diese können jeweils einen Antriebsmotor, beispielsweise einen Hydraulik- oder Elektromotor, aufweisen oder durch einen Antriebsstrang an eine Antriebseinrichtung, beispielsweise einen auf dem Oberbau angeordneten Antriebsmotor, insbesondere Verbrennungs- oder Elektromotor, angeschlossen sein. Der Antriebsstrang kann dazu ein Riemengetriebe oder ähnliches aufweisen. Bei der in den Figuren 1 und 2 gezeigten beispielhaften Rüttelplatte 1 ist die Schwingungserregungseinrichtung in einem in Vorwärtsrichtung A gesehen vorderen Drittel der Längserstreckung des Unterbaus in Vorwärtsrichtung A angeordnet.

Der Oberbau 3 ist in Vertikalrichtung oberhalb des Unterbaus 2 angeordnet und kann über Dämpfungseinrichtungen 7 (Fig. 2), beispielsweise Gummipuffer bzw. Gummilager, mit dem Unterbau 2 verbunden sein. Bei dem Oberbau 3 kann es sich um eine rahmenartige Tragstruktur handeln, auf der eine oder mehrere Funktionskomponenten 8 angeordnet sein können. Derartige Funktionskomponenten können beispielsweise ein Antriebsmotor und/oder ein oder mehrere Energiespeicher, insbesondere Akkumulatoren oder ein Kraftstofftank, Betriebsfluidtanks, wie beispielsweise ein Wasser- und/oder Öltank, eine oder mehrere Steuereinrichtungen, beispielsweise eine Leistungselektronik, oder ähnliches sein. Der Oberbau 3 kann ferner einen Schutzaufbau, beispielsweise einen Schutzkäfig 9 oder eine Schutzhaube oder andere mechanische Schutzeinrichtungen zum Schutz der Funktionskomponenten 8, aufweisen.

Die Handführungseinrichtung 4 kann über Dämpfungslager 10 mit dem Oberbau 3 der Rüttelplatte 1 verbunden sein, insbesondere in einem in Vorwärtsrichtung A gesehen hinteren Drittel der Längserstreckung des Oberbaus 3 in Vorwärtsrichtung A. Die Handführungseinrichtung 4 kann als Führungsdeichsel oder, wie in den Figuren 1 und 2 gezeigt, als im Wesentlichen U-förmiger Führungsbügel ausgebildet sein, der mit seinen beiden Längsschenkelenden über die Dämpfungslager 10 am Oberbau 3 der Rüttelplatte 1 angelenkt ist. Die Handführungseinrichtung 4 kann gegenüber dem Oberbau 3 um eine, insbesondere horizontal und quer zur Vorwärtsrichtung A verlaufende, Schwenkachse verschwenkbar sein. Die Handführungseinrichtung 4 kann vorzugsweise gegenüber dem Oberbau 3 mittels einer geeigneten Arretiereinrichtung (in den Figuren nicht gezeigt) arretiert bzw. festgestellt werden.

Die Rüttelplatte 1 kann eine Transporteinrichtung 11 aufweisen. Diese kann zwischen einer Stauposition, wie in der Fig. 2 gezeigt, und einer Transportposition, wie in der Fig. 3 gezeigt, verstellbar ausgebildet sein. Die Transporteinrichtung 11 kann eine Lagereinrichtung 12, insbesondere umfassend einen oder mehrere Lagerarme 13, und wenigstens ein Rad, insbesondere ein Paar Räder 14 aufweisen. Es ist vorteilhaft, wenn pro Lagerarm 13 jeweils wenigstens ein Rad vorhanden ist. Anstelle des Paares Räder 14 kann somit auch nur ein Rad, beispielsweise in Form einer Rolle, vorgesehen sein. Die Räder 14 können um eine gemeinsame, insbesondere horizontal und quer zur Vorwärtsrichtung A verlaufende, Raddrehachse R rotierbar sein. Insofern können ein in Vorwärtsrichtung A gesehen rechtes Rad 14R und ein in Vorwärtsrichtung A gesehen linkes Rad 14L vorhanden sein und das Räderpaar 14 bilden. Es können auch noch weitere Räder von der Transporteinrichtung 11 umfasst sein.

In der Stauposition ist das Räderpaar 14 gegenüber dem Bodenuntergrund 15 angehoben. Dazu kann es beispielsweise in einer Position gegenüber dem Oberbau 3 arretiert sein, in der sowohl die Räder als auch die Lagerarme 13 in einer Draufsicht auf die Rüttelplatte zwischen den beiden Längsschenkeln der beispielsweise als Handführungsbügel ausgebildeten Handführungseinrichtung 4 und/oder innerhalb der maximalen Breite B der Handführungseinrichtung in einer virtuellen horizontalen Bezugsebene liegen. Die Arretierung der Transporteinrichtung 11 in der Stauposition erfolgt mithilfe einer nachstehend noch näher beschriebenen Rasteinrichtung.

Aus der in den Figuren 1 und 2 gezeigten Stauposition heraus kann die Transporteinrichtung 11 in die in Fig. 3 gezeigte Transportposition um eine Lagerarmdrehachse L verschwenkt werden. Im vorliegenden Ausführungsbeispiel verläuft die Lagerarmdrehachse L parallel zur Raddrehachse R. Bei der Verschwenkbewegung der Transporteinrichtung 11 um die Lagerdrehachse L werden die Räder 14 somit in Verschwenkrichtung C gegenüber dem Oberbau 3 verschwenkt.

Fig. 3 zeigt eine Transportendlage. Ausgehend von der in den Figuren 1 und 2 dargestellten Stauposition kann die Verstellung der Transporteinrichtung 11 in mehreren aufeinanderfolgenden Phasen erfolgen. So kann die Transporteinrichtung 11 insbesondere zunächst in der Stauposition entriegelt werden, wie in den nachstehenden Figuren noch näher gezeigt. Hievon ausgehend kann die Transporteinrichtung 11 zunächst in Pfeilrichtung C, teilweise auch schwerkraftgetrieben, bis in eine Zwischenposition abschwenken, in der die Räder 14 auf dem Bodenuntergrund 15, im vorliegenden Ausführungsbeispiel beispielsweise in Vorwärtsrichtung A hinter dem Oberbau, aufliegen, wie in Fig. 2 mit 14R' angedeutet. In dieser Position kann die Rüttelplatte dann, beispielsweise durch eine Hochdrücken der Handführungseinrichtung 4 in Vorwärtsrichtung A, hinten angehoben werden, so dass die Räder 14 unter die Unterseite der Bodenkontaktplatte schwenken und die Komponenten Unterbau 2, Oberbau 3 und Handführungseinrichtung 4 auf die, beispielsweise wenigstens teilweise L-förmig ausgebildeten, Lagerarme 13 aufgebockt werden können. Die Transporteinrichtung 11 befindet sich dann in der Transportposition und die Rüttelplatte 1 steht über die Räder 14 auf dem Bodenuntergrund 15 auf, so dass sie leichter über den Bodenuntergrund, insbesondere zu Transportzwecken, bewegt werden kann.

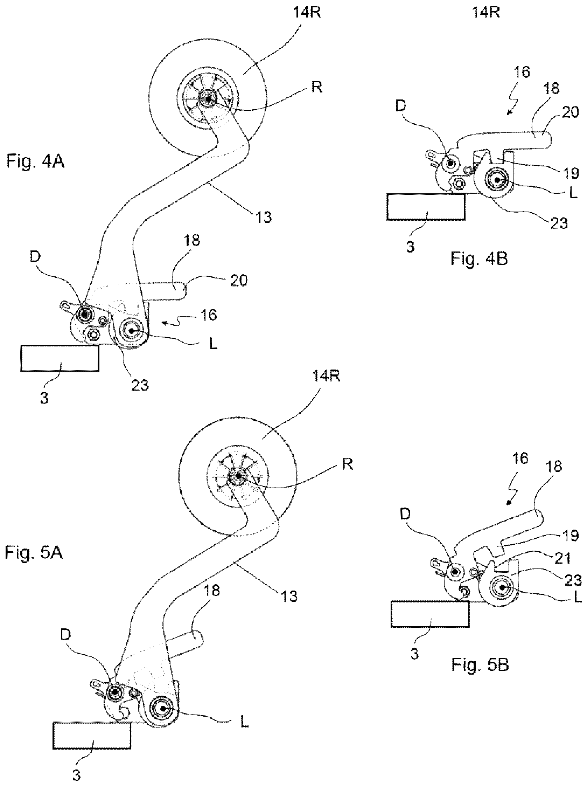

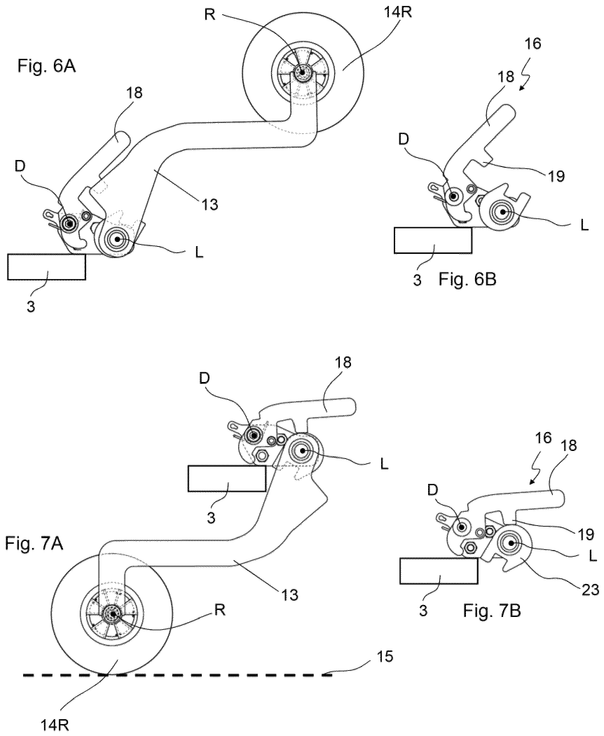

Die Figuren 4A bis 7B veranschaulichen den Aufbau und die Funktionsweise einer Rasteinrichtung 16 sowie eines Schwenkantriebsgetriebes 17 (Fig. 5A), die den Ablauf des zu den Figuren 2 und 3 beschriebenen Verstellvorgangs beeinflussen. In den mit "A" bezeichneten Figuren ist jeweils ein Lagerarm 13 aus der den Figuren 2 und 3 entsprechenden Perspektive mit weiteren, nachstehend noch beschriebenen Elementen dargestellt. In den mit "B" bezeichneten Figuren ist der Lagerarm 13 zusammen mit dem Rad 14R ausgeblendet. Der dort erkennbare Ausschnitt zeigt die Rasteinrichtung 16 in vergrößerter Darstellung. Die Transporteinrichtung 11 ist beispielhaft an der Obermasse 3 angelenkt, die in den Figuren 4A bis 7B lediglich aus Übersichtlichkeitsgründen stark schematisiert angedeutet ist. Figuren 4A und 4B entsprechen der Rüttelplatte aus der Fig. 2 mit der Transporteinrichtung 11 in der Stauposition. Figuren 7A und 7B entsprechen der Rüttelplatte aus der Fig. 3 mit der Transporteinrichtung 11 in der Transportposition.

Die Rasteinrichtung 16 umfasst ein als Rasthebel ausgebildetes Rastelement 18. Das Rastelement ist um eine Rastelementdrehachse D drehbar, konkret aus der in den Figuren 4A und 4B gezeigten Rastposition in Richtung eines Freigabebereiches. Das Rastelement 18 kann einen wenigstens teilweise in Richtung einer Drehbewegung um die Rastelementdrehachse D vorstehenden Sperranschlag 19 aufweisen. Es kann zudem ein in Radialrichtung zur Rastelementdrehachse D vorspringender Betätigungsvorsprung 20 vorhanden sein. Dieser kann sich an einen das Sperrelement 19 tragenden Bereich des Rasthebels radial außen zur Rastelementdrehachse D anschließen. Ideal ist es, wenn sich der Betätigungsvorsprung entgegen der Vorwärtsrichtung A bis über die Hinterkante des Unterbaus 2 und/oder bis über die Lagerarmdrehachse L erstreckt und über diese nach hinten wenigstens teilweise horizontal vorsteht, um beispielsweise für den Fuß eines Bedieners gut erreichbar zu sein.

Teil der Rasteinrichtung 16 ist ferner eine Sperrformation 21 (Fig. 5B). Diese weist einen auf einer entlang der Lagerarmdrehachse L verlaufenden Lagerarmwelle 22 (Fig. 1) angeordneten Steuernocken 23 auf. Der Steuernocken 23 ist ortsfest auf der Lagerarmwelle 22 und damit auch ortsfest relativ zu den Lagerarmen 13 angeordnet, so dass er sich bei einer Verschwenkung der Transporteinrichtung 11 relativ zum Oberbau 3 um die Lagerarmdrehachse L mitdreht. Der Steuernocken 23 umfasst einen gegenüber einer am Außenumfang des Steuernockens 23 um die Lagerdrehachse L verlaufenden Nockenfläche 24 (Fig. 7B) radial in Richtung zur Lagerarmdrehachse L nach innen zurückversetzten Rücksprung 25, der wenigstens teilweise in Umlaufrichtung um die Lagerdrehachse L formschlüssig an einen korrespondierenden Anlagebereich am Sperranschlag 19 ausgebildet sein kann. In der Rastposition greift das Rastelement 18 bei in der Transportposition befindlicher Transporteinrichtung und der damit einhergehenden Drehlage des Steuernockens 23 in diesen Rücksprung 25 ein und sperrt dadurch formschlüssig eine Drehbewegung der Transporteinrichtung 11 um die Lagerarmdrehachse L.

Das Rastelement 18 kann mit einer geeigneten Zug- oder Druckfedereinrichtung 26 (Fig. 4B) in Richtung der Rastposition, wie in den Figuren 4A und 4B, federbeaufschlagt sein.

Das Schwenkantriebsgetriebe 17 kann eine Steuerkurve 27 und einen Abtaster 28 aufweisen. Die Steuerkurve 27 kann Teil des Lagerarms 13 sein. Der Abstaster 28 kann am Rastelement 18 angeordnet sein. Er kann als, insbesondere in Axialrichtung der Lagerarmdrehachse L vorstehender Zapfen oder auch als, insbesondere wälzgelagerte, Rolle ausgebildet sein. Auch eine umgekehrte Anordnung dieser Elemente des Schwenkgetriebes 17 ist möglich. Der Abtaster 28 und die Steuerkurve 27 sind derart zueinander positioniert, dass sie bei einer Verstellung des Rastelementes 18 aus der Stauposition wenigstens dann in Anlage zueinanderkommen, wenn die Transporteinrichtung 11 in der Transportposition ist. Sie liegen mit anderen Worten in Axialrichtung der Lagerdrehachse L wenigstens teilweise auf gleicher Höhe, genauso wie der Sperranschlag 19 und die Sperrformation 21, und schlagen daher im Laufe der Verstellbewegung aneinander an. Dieser Vorgang wird nachfolgend anhand der Figuren 4A bis 7B näher erläutert.

In der Positionierung, wie in den Figuren 2, 4A und 4B gezeigt, sperrt das in der Rastposition befindliche Rastelement 18 eine Verstellung der in Stauposition befindlichen Transporteinrichtung 11 in Richtung der Transportposition in Pfeilrichtung C um die Lagerarmdrehachse L. Ein Bediener kann nun das Rastelement 18 um die Rastelementdrehachse D in Pfeilrichtung E in Richtung des Freigabebereiches bewegen, beispielsweise mit dem Fuß, einer Hand oder über einer in den Figuren nicht näher gezeigten Übertragungseinrichtung, wie beispielsweise einem am Rastelement 18 befestigten Bowdenzug oder ähnlichem. Auch eine motorische Verstellung des Rastelementes 18 ist möglich. Dadurch gelangt der Sperranschlag 19 außer Eingriff mit der Sperrformation 21 und erreicht dann seine Freigabeposition, wenn er in Radialrichtung zur Lagerarmdrehachse L soweit aus dem Rücksprung 25 der Sperrformation 21 ausgehoben worden ist, dass er bei einer Drehbewegung des Steuernockens 23 von dessen Nockenfläche 24 unterlaufen werden kann.

Sobald das Rastelement 18 wenigstens bis hin zur Freigabeposition in Richtung des Freigabebereiches um die Rastelementdrehachse D aus der Sperrformation 21 ausgehoben worden ist, schlägt der Abtaster 28 an der Steuerkurve 27 an. Bei einer Fortsetzung der Verstellbewegung des Rastelementes 18 in Pfeilrichtung E fährt der Abtaster 28 die Steuerkurve 27 ab und drückt dabei den Lagerarm 13 in Pfeilrichtung C aus der Stauposition der Transporteinrichtung 11 in Richtung der Transportposition.

Ab einer bestimmten Kipplage des Lagerarms 13, insbesondere dann, wenn sich die Verschwenkbewegung des Lagerarms 13 schwerkraftgetrieben selbsttätig in Richtung der Transportposition weiter fortsetzt, ist es möglich, dass sich der Abtaster 28 von der Steuerkurve 27 abhebt, so dass ab diesem Zeitpunkt kein Getriebeeingriff mehr vorliegt und die einzelnen Elemente des Schwenkantriebsgetriebes 17 keine Getriebefunktion mehr erfüllen. Dies ist beispielsweise in den Figuren 6A und 6B der Fall. Der Anlagebereich zwischen dem Abtaster 28 und der Steuerkurve 27 wird auch als Übertragungsbereich 29 des Kurvengetriebes bezeichnet und ist in der Fig. 7A exemplarisch markiert. Um ein "Herabfallen" der Transporteinrichtung zu kontrollieren, kann eine Drehdämpfungseinrichtung 30 (Fig. 5A) vorgesehen sein, beispielsweise in Form einer Gasdruckfeder oder ähnlichem.

Um die Transporteinrichtung 11 in die finale Transportposition, wie in den Figuren 7A und 7B gezeigt, zu bringen, kann es vorgesehen sein, dass die Rüttelplatte 1 dazu von hinten in Richtung der Vorwärtsrichtung A hochgeschwenkt wird, so dass die Lagerarme 13 mit den Rädern 14 unter die Unterseite der Bodenkontaktplatte 5 schwenken können. Anschließend kann die Rüttelplatte auf die Lagerarme 13 aufgebockt werden, so dass sie mit den Rädern 14 auf dem Bodenuntergrund 15 aufsteht.

Es ist möglich, aber nicht unbedingt erforderlich, die Transporteinrichtung 11 auch in der Transportposition 11 zu arretieren. Dazu kann es beispielsweise vorgesehen sein, dass am Steuernocken 23 ein weiterer Rücksprung vorhanden ist. Im vorliegenden Ausführungsbeispiel erfolgt allerdings keine Arretierung der Transporteinrichtung 11 in der Transportposition. Durch die Federbeaufschlagung des Rastelementes 18 wird dieses jedoch mit seinem Sperranschlag 19 auf die Nockenfläche 24 gedrückt. Wird die Transporteinrichtung 11 aus der Transportposition in Richtung der Stauposition um die Lagerarmdrehachse L verschwenkt, schiebt die unter dem Sperranschlag 19 drehende Nockenfläche 24 das Rastelement18 bzw. den Sperranschlag 19 des Rastelementes 18 in Radialrichtung zur Lagerarmdrehachse L nach außen. Wird die Drehbewegung in Richtung zur Stauposition hin weiter fortgesetzt, kann der Sperranschlag 19 dann getrieben durch die Zug- oder Druckfedereinrichtung 26 selbsttätig in die Sperrformation 21 bzw. den Rücksprung 25 einschnappen.

Fig. 9 veranschaulicht den Ablauf eines Verfahrens 31 zum Verstellen einer Transporteinrichtung 11 einer Rüttelplatte 1 zwischen einer Stauposition 32 und einer Transportposition 33, insbesondere wie vorstehend beschrieben, ganz besonders mit einer Rüttelplatte 1 wie vorstehend beschrieben.

Das Verfahren 31 kann zum Verstellen 34 aus der Stauposition 32 in Richtung der Transportposition 33 ein Lösen a) einer Verrastung einer Rasteinrichtung 16 einer Lagereinrichtung 12 der Transporteinrichtung 11 durch ein Verstellen eines Rastelementes 18 aus einer Rastposition in Richtung eines Freigabebereiches und ein Verstellen b) der Transporteinrichtung 11 aus der Stauposition 32 in Richtung der Transportposition 33 mithilfe eines Schwenkantriebsgetriebes 17 vorsehen. Die Schritte a) und b) können funktional nacheinander erfolgen, insbesondere derart, dass eine Fortsetzung der Verstellbewegung des Rastelements, insbesondere in die gleiche Bewegungsrichtung, im Schritt a) den Schritt b) antreibt. Dies kann gleichzeitig zum Schritt a) erfolgen und/oder zeitlich einander überlappend.

Zum Verstellen 35 aus der Transportposition 33 in Richtung der Stauposition 32 kann es vorgesehen sein, dass ein Verschwenken c) der Lagereinrichtung 12 aus der Transportposition 33 in Richtung der Stauposition 32 durchgeführt wird, dabei ein Ablaufen d) einer Nockenfläche 24 eines Steuernockens 23 und dadurch ein Verstellen des Rastelementes 18 in Radialrichtung nach außen gegenüber der Lagerarmdrehachse L und schließlich ein, insbesondere federkraftgetriebenes, Einrasten e) des Rastelementes 18 in einer Rastposition durch Verstellen einer Rastformation bzw. eines Sperranschlages 19 des Rastelementes 18 in Radialrichtung nach innen gegenüber der Lagerarmdrehachse L erfolgt.

### BEZUGSZEICHENLISTE

- 1: Rüttelplatte
- 2: Unterbau
- 3: Oberbau
- 4: Handführungseinrichtung
- 5: Bodenkontaktplatte
- 6: Schwingungserregungseinrichtung
- 7: Dämpfungseinrichtung
- 8: Funktionseinrichtungen
- 9: Schutzkäfig
- 10: Dämpfungslager
- 11: Transporteinrichtung
- 12: Lagereinrichtung
- 13: Lagerarm
- 14: Rad
- 14L: linkes Rad
- 14R: rechtes Rad
- 15: Bodenuntergrund
- 16: Rasteinrichtung
- 17: Schwenkantriebsgetriebe
- 18: Rastelement (Rasthebel)
- 19: Sperranschlag
- 20: Betätigungsvorsprung
- 21: Sperrformation
- 22: Lagerarmwelle
- 23: Steuernocken
- 24: Nockenfläche
- 25: Rücksprung
- 26: Zug- oder Druckfedereinrichtung
- 27: Steuerkurve
- 28: Abtaster
- 29: Übertragungsbereich
- 30: Drehdämpfungseinrichtung
- 31: Verfahren
- 32: Stauposition
- 33: Transportposition
- 34: Verstellen aus der Stauposition in Richtung der Transportposition
- 35: Verstellen aus der Transportposition in Richtung der Stauposition
- A: Vorwärtsrichtung
- B: Breite
- C: Verschwenkrichtung in Richtung der Transportposition
- D: Rastelementdrehachse
- E: Bewegungsrichtung in den Freigabebereich
- L: Lagerarmdrehachse
- R: Raddrehachse
- a): Lösen
- b): Verstellen
- c): Verschwenken
- d): Ablaufen
- e): Einrasten

## Patentansprüche

1. Rüttelplatte (1), umfassend
- einen Unterbau (2) mit einer Bodenkontaktplatte (5),
- einen über eine Dämpfungseinrichtung (7) mit dem Unterbau (2) verbundenen Oberbau (3) mit einer oder mehreren Funktionseinrichtungen (8),
- eine Handführungseinrichtung (4) sowie
- eine an dem Oberbau (3) zwischen einer Stauposition und einer Transportposition um eine Lagerarmdrehachse (L) verschwenkbar gelagerte Transporteinrichtung (11),
die Transporteinrichtung (11) umfassend
- ein an einer Lagereinrichtung (12) mit wenigstens einem Lagerarm (13) angeordnetes Rad (14), wobei der wenigstens eine Lagerarm (13) um die Lagerarmdrehachse (L) relativ zum Oberbau (3) der Rüttelplatte (1) zwischen der Stauposition und der Transportposition verschwenkbar ist,
- eine Rasteinrichtung (16) zur Arretierung der Transporteinrichtung (11) in der Stauposition mit einem Rastelement (18), das aus einer Rastposition in Richtung eines Freigabebereiches verstellbar ist, und
- einem Schwenkantriebsgetriebe (17), welches derart ausgebildet ist, dass es eine Verstellbewegung der Rasteinrichtung (16) in eine Verschwenkbewegung des Lagerarms (13) aus der Stauposition in Richtung der Transportposition umwandelt.

2. Rüttelplatte (1) gemäß Anspruch 1,
**dadurch gekennzeichnet,**
**dass** das Rastelement (18) einen Sperranschlag (19) aufweist, der in der Stauposition der Transporteinrichtung (11) mit einer drehfest mit dem wenigstens einen Lagerarm (13) verbundenen Sperrformation (21) derart in Eingriff steht, dass eine Schwenkbewegung um die Lagerarmdrehachse (L) aus der Stauposition in Richtung der Transportposition blockiert wird.

3. Rüttelplatte (1) gemäß Anspruch 2,
**dadurch gekennzeichnet,**
**dass** die Sperrformation (21) an einer in Längsrichtung der Lagerarmdrehachse (L) verlaufenden Lagerarmwelle (22) angeordnet ist.

4. Rüttelplatte (1) gemäß einem der Ansprüche 2 oder 3,
**dadurch gekennzeichnet,**
**dass** die Sperrformation (21) Teil eines Steuernockens (23) mit einer um die Lagerarmdrehachse (L) verlaufenden Nockenfläche (24) ist.

5. Rüttelplatte (1) gemäß einem der vorhergehenden Ansprüche,
**dadurch gekennzeichnet,**
**dass** das Rastelement (18) federbeaufschlagt in Richtung seiner Rastposition ist.

6. Rüttelplatte (1) gemäß einem der vorhergehenden Ansprüche,
**dadurch gekennzeichnet,**
**dass** das Schwenkantriebsgetriebe (17) als ein Kurvengetriebe ausgebildet ist.

7. Rüttelplatte (1) gemäß Anspruch 6,
**dadurch gekennzeichnet,**
**dass** das Schwenkantriebsgetriebe (17) eine ortsfest zum Lagerarm (13) ausgebildete Steuerkurve (27) und einen ortsfest zum Rastelement (18) angeordneten Abtaster (28) umfasst.

8. Rüttelplatte (1) gemäß Anspruch 7,
**dadurch gekennzeichnet,**
**dass** der Abtaster (28) ein Abtastzapfen ist, der in Axialrichtung der Lagerarmdrehachse (L) vom Rastelement (18) vorsteht.

9. Rüttelplatte (1) gemäß einem der Ansprüche 6 bis 8,
**dadurch gekennzeichnet,**
**dass** ein Übertragungsbereich (29) des Kurvengetriebes und ein Kontaktbereich der Ratseinrichtung in Richtung der Lagerarmdrehachse (L) axial beabstandet sind.

10. Rüttelplatte (1) gemäß einem der vorhergehenden Ansprüche,
**dadurch gekennzeichnet,**
**dass** das Rastelement (18) fussbetätigbar und/oder mithilfe einer Übertragungseinrichtung manuell, insbesondere von der Handführungseinrichtung aus, betätigbar.

11. Rüttelplatte (1) gemäß einem der vorhergehenden Ansprüche,
**dadurch gekennzeichnet,**
**dass** eine Drehdämpfungseinrichtung (30) vorhanden ist, die derart ausgebildet ist, dass sie die Verstellbewegung der Transporteinrichtung (11) wenigstens von der Stauposition und die Transportposition dämpft.

12. Verfahren (31) zum Verstellen einer zwischen einer Stauposition und einer Transportposition verschwenkbaren Transporteinrichtung (11) einer Rüttelplatte (1), insbesondere einer Rüttelplatte (1) gemäß einem der Ansprüche 1 bis 11,
umfassend zum Verstellen (34) aus der Stauposition in Richtung der Transportposition die Schritte
a) Lösen einer Verrastung einer Rasteinrichtung (16) einer Lagereinrichtung (12) der Transporteinrichtung (11) durch ein Verstellen eines Rastelementes (18) aus einer Rastposition in Richtung eines Freigabebereiches;
b) Verstellen der Transporteinrichtung (11) aus der Stauposition in Richtung der Transportposition mithilfe eines Schwenkantriebsgetriebes (17).

13. Verfahren gemäß Anspruch 12,
**dadurch gekennzeichnet,**
**dass** die Schritte a) und b) funktional nacheinander erfolgen, insbesondere derart, dass eine Fortsetzung der Verstellbewegung des Rastelementes (18) im Schritt a) den Schritt b) antreibt.

14. Verfahren gemäß Anspruch 13,
**dadurch gekennzeichnet,**
**dass** zur Einleitung des Schrittes b) ein Abtaster (28) eines Kurvengetriebes an eine Steuerkurve (27) des Kurvengetriebes anschlägt.

15. Verfahren gemäß einem der Ansprüche 12 bis 14,
umfassend zum Verstellen (35) aus der Transportposition in Richtung der Stauposition die Schritte
c) Verschwenken der Lagereinrichtung (12) aus der Transportposition in Richtung der Stauposition;
d) Ablaufen einer Nockenfläche (24) eines Steuernockens (23) und dabei Verstellen des Rastelementes (18) in Radialrichtung nach außen gegenüber der Lagerarmdrehachse (L);
e) Einrasten des Rastelementes (18) in einer Rastposition durch Verstellen einer Rastformation des Rastelementes (18) in Radialrichtung nach innen gegenüber der Lagerarmdrehachse (L).
